# EUROPEAN PATENT APPLICATION

(11) **EP 4 502 099 A1**
(43) Date of publication of application: **05.02.2025**
(21) Application number: 23780471.1
(22) Date of filing: 28.03.2023
(51) Int. Cl.: C09J 163/00, C09J 175/04, H01M 8/0284, H01M 8/10, C09J 7/35

(54) **HOT-MELT ADHESIVE SHEET**

(30) Priority: 31.03.2022 JP 2022060363
(71) Applicant: Nitto Shinko Corporation, Sakai-shi, Fukui 910-0381 (JP)
(72) Inventor: MUKOBATA, Kazumasa, Sakai-shi, Fukui 910-0381 (JP); TABUCHI, Akihiro, Sakai-shi, Fukui 910-0381 (JP); TAKABATAKE, Ryota, Sakai-shi, Fukui 910-0381 (JP)
(74) Representative: Stolmár & Partner Patentanwälte PartG mbB
(86) International application number: PCT/JP2023/012405
(87) International publication number: WO 2023/190462

(57) **Abstract**

A hot melt adhesive sheet according to the present invention is a hot melt adhesive sheet including a base material having at least one surface on which an adhesive layer made of a hot melt adhesive is disposed. The hot melt adhesive includes a crosslinked product of an adhesive composition including a crosslinking agent, and includes a polyurethane resin, an epoxy resin, and 6 mass parts or more and 14 mass parts or less of an isocyanate-based crosslinking agent based on 100 mass parts of the polyurethane resin. The polyurethane resin has a constituent unit derived from a polyol having a skeleton with 8 or more carbon atoms. The epoxy resin is a bisphenol A type epoxy resin having an epoxy equivalent of 450 g/eq or more and 3000 g/eq or less.

## Description

### CROSS-REFERENCE TO RELATED APPLICATION

This application claims priority to Japanese Patent Application No. 2022-060363, the disclosure of which is incorporated herein by reference in its entirety.

### FIELD

The present invention relates to a hot melt adhesive sheet.

### BACKGROUND

Conventionally, polyurethane-based adhesives have been frequently used as adhesives for various plastics in terms of adhesion stability in a low temperature range (e.g., - 10 °C to 15 °C), and in terms of adhesiveness, flexibility, workability, and facilitated molecular designs in a normal temperature range (25 ± 10 °C). Examples of the polyurethane-based adhesives include: an adhesive including a polyester polyol or an acrylic polyol as a main agent and a polyisocyanate as a crosslinking agent, the adhesive being configured to cause crosslinking reaction to proceed between the main agent and the crosslinking agent to form a urethane bond for use; and an adhesive including a polyurethane having a relatively long chain (so called polyurethane prepolymer) as a main agent and an isocyanate-based crosslinking agent as a crosslinking agent, the adhesive being configured to cause crosslinking reaction to proceed between the main agent and the crosslinking agent to cure the adhesive for use.

Patent Literature 1 discloses an adhesive excellent in wet heat resistance as a two-pack adhesive including a polyurethane resin as a main agent and including an epoxy resin and an isocyanate-based crosslinking agent. In recent years, a hot melt adhesive has been increasingly used to bond members as it is more easily handled than the liquid adhesive as disclosed in Patent Literature 1 below. The hot melt adhesive is often used in a form of a hot melt adhesive sheet in terms of its particularly excellent handlability. In general, the hot melt adhesive sheet includes a base material layer formed of a polymer sheet, and an adhesive layer disposed on the base material layer and made of the hot melt adhesive.

### CITATION LIST

### Patent Literature

Patent Literature 1: WO 2013/157604 A

### SUMMARY

### Technical Problem

Improved wet heat resistance (hot water resistance) needs to be achieved not only for the two-pack adhesive as disclosed in Patent Literature 1 but also for the adhesive layer of the hot melt adhesive sheet.

The hot melt adhesive sheet has been required to have the adhesive layer with, e.g., improved acid resistance and alcohol resistance, which has yet to be achieved.

The present invention has been conceived in view of the problems of such known techniques, and it is an object of the present invention to provide a hot melt adhesive sheet including an adhesive layer excellent in hot water resistance, acid resistance, and alcohol resistance.

### Solution to Problem

A hot melt adhesive sheet according to the present invention is a hot melt adhesive sheet including a base material having at least one surface on which an adhesive layer made of a hot melt adhesive is disposed, in which the hot melt adhesive includes a crosslinked product of an adhesive composition including a crosslinking agent, and includes a polyurethane resin, an epoxy resin, and 6 mass parts or more and 14 mass parts or less of an isocyanate-based crosslinking agent based on 100 mass parts of the polyurethane resin, the polyurethane resin has a constituent unit derived from a polyol having a skeleton with 8 or more carbon atoms, and the epoxy resin is a bisphenol A type epoxy resin having an epoxy equivalent of 450 g/eq or more and 3000 g/eq or less.

### BRIEF DESCRIPTION OF DRAWINGS

Fig. 1 is a schematic cross-sectional view showing a configuration of a hot melt adhesive sheet according to one embodiment of the present invention.
Fig. 2 is a schematic cross-sectional view showing a state where the hot melt adhesive sheet according to the one embodiment of the present invention is attached to a solid electrolyte membrane of a solid polymer fuel cell for use.

### DESCRIPTION OF EMBODIMENTS

A description will be hereinafter given on a hot melt adhesive sheet according to one embodiment of the present invention. Hereinafter, one embodiment of the present invention may be referred to simply as this embodiment.

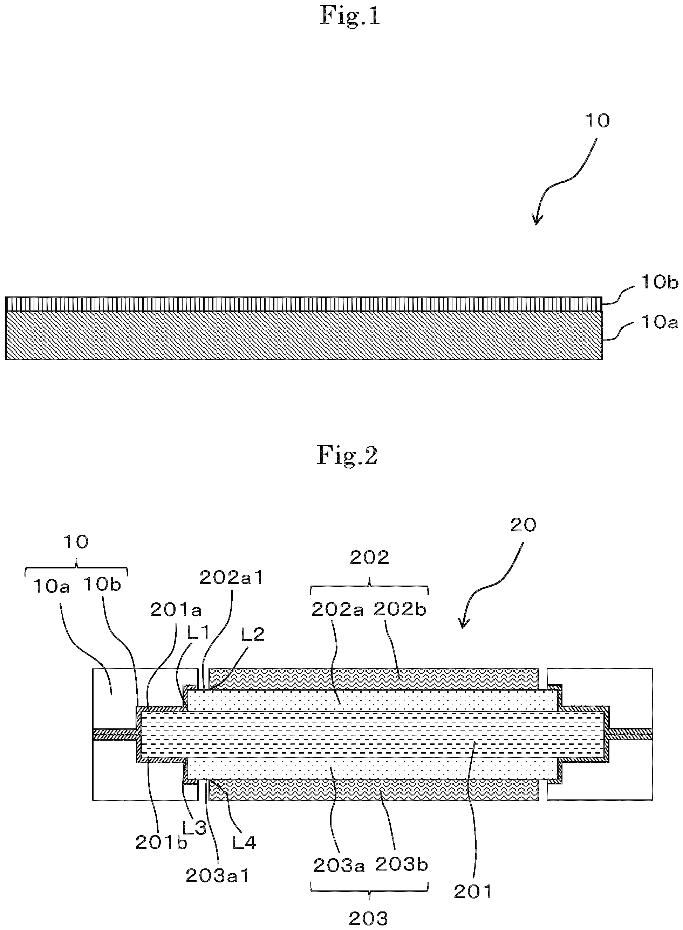

As shown in Fig. 1, a hot melt adhesive sheet 10 according to this embodiment is a hot melt adhesive sheet including a base material 10a having one surface on which an adhesive layer 10b made of a hot melt adhesive is disposed (laminated). In the hot melt adhesive sheet 10 shown in Fig. 1, the adhesive layer 10b is disposed (laminated) only on the one surface of the base material 10a, but the adhesive layer 10b can be disposed (laminated) on an other surface of the base material 10a. That is, the hot melt adhesive sheet 10 can be a hot melt adhesive sheet with the adhesive layers 10b disposed (laminated) on both surfaces of the base material 10a.

In the hot melt adhesive sheet 10 according to this embodiment, the hot melt adhesive includes a crosslinked product of an adhesive composition including a crosslinking agent, and includes a polyurethane resin, an epoxy resin, and 6 mass parts or more and 14 mass parts or less of an isocyanate-based crosslinking agent based on 100 mass parts of the polyurethane resin. In the hot melt adhesive sheet 10 according to this embodiment, the polyurethane resin has a constituent unit derived from a polyol having a skeleton with 8 or more carbon atoms. In the hot melt adhesive sheet 10 according to this embodiment, the epoxy resin is a bisphenol A type epoxy resin having an epoxy equivalent of 450 g/eq or more and 3000 g/eq or less. Hereinafter, the polyurethane resin will be referred to as polyurethane resin (A), the epoxy resin will be referred to as epoxy resin (B), and the isocyanate-based crosslinking agent will be referred to as isocyanate-based crosslinking agent (C).

### (Polyurethane resin (A))

The polyurethane resin (A) is obtained by a urethane bond of reactive components including a polyol component (a) having two or more hydroxyl groups in one molecule and a polyisocyanate component (b) having two or more isocyanate groups in one molecule. In this embodiment, as has already been described, the polyurethane resin (A) has, as the polyol component (a), a constituent unit derived from a polyol (a1) having a skeleton with 8 or more carbon atoms.

The polyurethane resin (A) preferably includes a hydroxyl group-containing polyurethane resin having a hydroxyl group to react with the isocyanate-based crosslinking agent (C). The hydroxyl group-containing polyurethane resin preferably has a hydroxyl group at a terminal thereof. The hydroxyl group-containing polyurethane resin has a hydroxyl value of preferably 0.1 mgKOH/g or more and 20 mgKOH/g or less, more preferably 1 mgKOH/g or more and 15 mgKOH/g or less.

In the adhesive layer 10b of the hot melt adhesive sheet 10 according to this embodiment, the polyurethane resin (A) is crosslinked with the epoxy resin (B) by the isocyanate-based crosslinking agent (C). Specifically, in the adhesive layer 10b of the hot melt adhesive sheet 10 according to this embodiment, the polyurethane resin (A) and the epoxy resin (B) are crosslinked by the isocyanate-based crosslinking agent (C) at a relatively low temperature (a temperature of 60 °C or less). That is, the adhesive layer 10b of the hot melt adhesive sheet 10 according to this embodiment includes the polyurethane resin (A) and the epoxy resin (B) in a state of being crosslinked by the isocyanate-based crosslinking agent (C) at a relatively low temperature (a temperature of 60 °C or less). As described above, the configuration that the polyurethane resin (A) and the epoxy resin (B) are crosslinked by the isocyanate-based crosslinking agent (C) enables the adhesive layer 10b to be easily thermocompression bonded to a member (adherend). This configuration also suppresses the adhesive layer 10b from being peeled off from the adherend even after the adhesive layer 10b in the state of adhering to an adherend (e.g., a PEN film) is immersed in hot water at 95 °C, in dilute sulfuric acid (pH 2) at 95 °C, or in a water-ethylene glycol mixed solution (with a mixing ratio of ethylene glycol of 50 volume %) at 95 °C for a long period of time of 1000 hours. That is, the adhesive layer 10b of the hot melt adhesive sheet 10 has excellent long-term hot water resistance, long-term acid resistance, and long-term alcohol resistance.

The polyol component (a) preferably includes a general polyol (a2) along with the polyol (a1) having the skeleton with 8 or more carbon atoms. Hereinafter, the general polyol (a2) can be referred to simply as the polyol (a2). The polyol (a1) having the skeleton with 8 or more carbon atoms herein means a polyol having 8 or more carbon atoms between hydroxyl groups, in which the 8 or more carbon atoms between hydroxyl groups can be bonded to each other via heteroatoms, or can have saturated bonds or unsaturated bonds adjacent to each other. The polyol (a1) having the skeleton with 8 or more carbon atoms is preferably a polycarbonate polyol. In the polyol (a1) having the skeleton with 8 or more carbon atoms, the number of heteroatoms included in a portion with the 8 or more carbon atoms is preferably 2 or less. Further, the polyol (a1) having the skeleton with 8 or more carbon atoms preferably has in its molecule a residue obtained by removing a plurality of hydrogen atoms from a saturated or unsaturated hydrocarbon having 8 or more carbon atoms. The polyol (a1) having the skeleton with 8 or more carbon atoms preferably has an alkylene group having 6 or more carbon atoms.

Examples of the polyol (a1) having the skeleton with 8 or more carbon atoms include a polyester polyol obtained by condensation polymerization of monomers including a dicarboxylic acid (e.g., sebacic acid (10 carbon atoms), azelaic acid (9 carbon atoms), isophthalic acid (8 carbon atoms), terephthalic acid (8 carbon atoms)), and a glycol (e.g., 1,9-nonanediol (9 carbon atoms), 1,4-bishydroxymethylcyclohexane (8 carbon atoms)).

Examples of the polyol (a1) having the skeleton with 8 or more carbon atoms include a polycarbonate polyol such as poly(1,4-cyclohexanedimethylene carbonate) diol (8 carbon atoms), polyoctamethylene carbonate diol (8 carbon atoms), polynonamethylene carbonate diol (9 carbon atoms), and polydecamethylene carbonate diol (10 carbon atoms), and a random/block copolymer of monomers including these.

Examples of the polyol (a1) having the skeleton with 8 or more carbon atoms include a polyol derived from a dimer acid. The dimer acid is a dicarboxylic acid having 36 carbon atoms obtained by dimerizing an unsaturated fatty acid having 18 carbon atoms, such as oleic acid or linoleic acid, and is a fatty acid derived from plants. A representative structure of the dimer acid is shown by a following formula (1). The dimer acid can include a trimer acid. The trimer acid is a tricarboxylic acid having 54 carbon atoms obtained by trimerizing the abovementioned unsaturated fatty acid having 18 carbon atoms, and is also produced as a byproduct when a dimer acid is produced. A commercially available dimer acid generally includes a trimer acid.

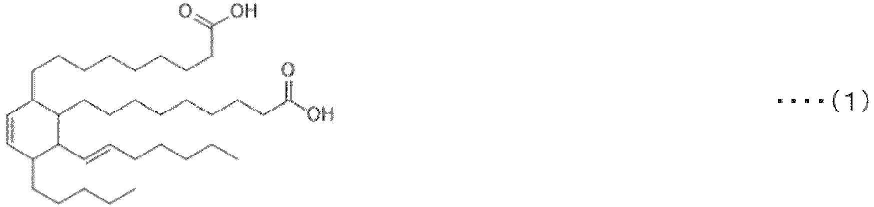

Dimer diol, which is a polyol derived from a dimer acid, is a polyol having 36 carbon atoms obtained by reducing the carboxyl group of the dimer acid to a hydroxyl group. The polyol can have a molecule with or without an unsaturated bond therein. Specific examples of such a dimer polyol include dimer diol. Similarly, trimer triol is also a polyol obtained by reducing the carboxyl group of a trimer acid to a hydroxyl group. A commercially available dimer diol generally includes trimer triol. Therefore, the polyol derived from the dimer acid, the dimer polyol, and the dimer diol can include the trimer triol.

Examples of the polyol (a1) having the skeleton with 8 or more carbon atoms further include a polyolefin polyol. The polyolefin polyol is a polymer obtained by polymerizing one or more polyolefins each having a plurality of hydroxyl groups. Specific examples of such a polyolefin polyol include polyethylene butylene diol, polybutadiene diol, and hydrogenated polybutadiene diol. These are polyols each having extremely long carbon chains as they are obtained by polymerizing carbon chains to each other.

The configuration of the adhesive layer 10b of the hot melt adhesive sheet 10 that the polyurethane resin (A) has the aforementioned constituent unit derived from the polyol (a1) having the skeleton with 8 or more carbon atoms can increase hydrophobicity of the adhesive layer 10b as compared with the configuration without the constituent unit derived from the polyol (a1) having the skeleton with 8 or more carbon atoms. This configuration allows such an adhesive layer 10b to have excellent hot water resistance, acid resistance, and alcohol resistance.

As the polyol (a2), any conventionally known polyol used in synthesizing a polyurethane resin can be used. Specific examples of the polyol (a2) include a polyester polyol, a polyether polyol, a polycarbonate polyol, and other polyols.

Examples of the polyester polyol include one obtained by condensation polymerization of an aliphatic dicarboxylic acid (e.g., succinic acid, adipic acid, glutaric acid) and a low molecular weight glycol (e.g., ethylene glycol, 1,2-propylene glycol, 1,3-propylene glycol, 1,4-butylene glycol, 1,6-hexamethylene glycol, neopentyl glycol). The polyester polyol as above can be copolymerized with a dicarboxylic acid or glycol having 8 or more carbon atoms.

Specific examples of such a polyester polyol include polyethylene adipate diol, polybutylene adipate diol, polyhexamethylene adipate diol, polyneopentyl adipate diol, polyethylene/butylene adipate diol, polyneopentyl/hexyl adipate diol, poly-3-methylpentane adipate diol, polybutylene isophthalate diol, polycaprolactone diol, and poly-3-methylvalerolactone diol. The polyester polyol is more excellent in heat resistance than the polyether polyol. Thus, the polyester polyol is more advantageous than the polyether polyol in obtaining the adhesive layer 10b excellent in heat resistance.

Specific examples of the polyether polyol include polyethylene glycol, polypropylene glycol, polytetramethylene glycol, and a random/block copolymer thereof. The polyether polyol is more excellent in hydrolysis resistance than the polyester polyol. Thus, the polyether polyol is more advantageous than the polyester polyol in obtaining the adhesive layer 10b excellent in hydrolysis resistance.

Specific examples of the polycarbonate polyol include polytetramethylene carbonate diol, polypentamethylene carbonate diol, polyneopentyl carbonate diol, polyhexamethylene carbonate diol, and a random/block copolymer thereof. Any of the above polycarbonate polyols can be copolymerized with a diol having 8 or more carbon atoms. The configuration that those aforementioned various polycarbonate diols are used as the polycarbonate polyol allows the polyurethane resin (A) to have a constituent unit of the carbonate diol. The polycarbonate polyol is excellent in hydrolysis resistance and heat resistance. This is advantageous in obtaining the adhesive layer 10b excellent in hydrolysis resistance and heat resistance. Among the polycarbonate polyols, polyhexamethylene carbonate diol is preferable in terms of costs and availability as a material.

Specific examples of the other polyols include an acrylic polyol, an epoxy polyol, a polyether ester polyol, a siloxane-modified polyol, α,ω-polymethyl methacrylate diol, and α,ω-polybutyl methacrylate diol.

To summarize the above description of the polyol (a2), it is preferable to use the polycarbonate polyol excellent in hydrolysis resistance and heat resistance in terms of obtaining the adhesive layer 10b of the hot melt adhesive sheet 10 excellent in hot water resistance. It is particularly preferable to use the polyhexamethylene carbonate diol among the polycarbonate polyols in terms of costs and availability as the material.

The number average molecular weight Mn (measured by the terminal functional group quantification method) of each of the polyol (a1) and the polyol (a2) is not particularly limited, but is preferably 500 or more and 6000 or less. The configuration that the number average molecular weight Mn of each of the polyol (a1) and the polyol (a2) falls within the above numerical range allows the adhesive layer 10b of the hot melt adhesive sheet 10 of this embodiment to easily exhibit cohesive force due to urethane bond. The adhesive of this embodiment thereby has excellent mechanical properties. A crystalline polyol when formed into a film shape as the adhesive layer 10b may cause whitening phenomenon in the adhesive layer 10b if the crystalline polyol has a number average molecular weight Mn too large. Thus, it is preferable to use a crystalline polyol having a number average molecular weight Mn of 3,000 or less if the crystalline polyol is individually used as the polyol (a1) and the polyol (a2). The polyol (a1) and the polyol (a2) can each be individually used, or two or more of them can be used in combination.

The polyol (a1) is preferably mixed in a proportion of 10 mass % or more and 60 mass % or less when the polyol component (a) is 100 mass %. The configuration that the polyol (a1) is mixed in a proportion of 10 mass % or more enables the hot melt adhesive according to this embodiment to have sufficient hot water resistance, acid resistance, and alcohol resistance. The configuration that the polyol (a1) is mixed in a proportion of 60 mass % or less enables improved compatibility between the polyurethane resin (A) and the epoxy resin (B), and enables the obtained hot melt adhesive to have excellent tight adhesiveness to a polyethylene terephthalate film, a polyethylene naphthalate film, a polybutylene terephthalate film, and a resin film made of a perfluorocarbon sulfonic acid resin. When the polyol component (a) is a copolymer of a monomer having a skeleton with 8 or more carbon atoms and a monomer having a skeleton with 7 or less carbon atoms, the mass part of the monomer having the skeleton with 8 or more carbon atoms is calculated as the mass part of the polyol (a1), and the mass part of the monomer having the skeleton with 7 or less carbon atoms is calculated as the mass part of the polyol (a2).

As the polyol component (a), a short chain diol (a3) can be used as necessary, in addition to the polyol (a1) and the polyol (a2). Specific examples of the short chain diol (a3) include: aliphatic glycols such as ethylene glycol, 1,2-propylene glycol, 1,3-propylene glycol, 1,3-butylene glycol, 1,4-butylene glycol, 1,6-hexamethylene glycol, and neopentyl glycol, and alkylene oxide low molar adducts thereof (number average molecular weight Mn of less than 500 as determined by the terminal functional group quantification method); alicyclic glycols such as 1,4-bishydroxymethylcyclohexane and 2-methyl-1,1-cyclohexanedimethanol, and alkylene oxide low molar adducts thereof (number average molecular weight Mn of less than 500, same as above); aromatic glycols such as xylylene glycol, and alkylene oxide low molar adducts thereof (number average molecular weight Mn of less than 500, same as above); and bisphenols such as bisphenol A, thiobisphenol, and sulfonebisphenol, and alkylene oxide low molar adduct thereof (number average molecular weight Mn of less than 500, same as above). Among the short chain diols (a3) as above, it is preferable to use, for example, ethylene glycol, 1,3-propylene glycol, 1,3-butylene glycol, 1,4-butylene glycol, 1,6-hexamethylene glycol, or neopentyl glycol, and it is particularly preferable to use ethylene glycol, 1,3-butylene glycol, or 1,4-butylene glycol. These short chain diols (a3) can be individually used, or two or more of them can be used in combination.

When the polyurethane resin (A) is produced, a polyhydric alcohol-based compound can also be used as a material for the polyurethane resin (A), similar to the short chain diol (a3). Specific examples of the polyhydric alcohol-based compound include glycerin, trimethylolethane, trimethylolpropane, pentaerythritol, tris-(2-hydroxyethyl)isocyanurate, 1,1,1-trimethylolethane, and 1,1,1-trimethylolpropane.

A hydroxyl group-containing compound (a4) having a carboxyl group can be used as necessary. The hydroxyl group-containing compound (a4) having the carboxyl group usually has two or more hydroxyl groups in one molecule. The hydroxyl group-containing compound (a4) having the carboxyl group, which usually has two or more hydroxyl groups in one molecule, reacts with the polyisocyanate component (b) having two or more isocyanate groups in one molecule to obtain the polyurethane resin.

Examples of the hydroxyl group-containing compound (a4) having the carboxyl group include: dimethylolpropanoic acid, dimethylolbutanoic acid, alkylene oxide low molar adducts thereof (number average molecular weight Mn of less than 500); a γ-caprolactone low molar adduct (number average molecular weight Mn of less than 500); half esters derived from acid anhydrides and glycerin; and compounds derived by subjecting monomers having a hydroxyl group and an unsaturated group to free radical reaction with monomers having a carboxyl group and an unsaturated group. Among these various compounds, it is preferable to use dimethylolpropanoic acid or dimethylolbutanoic acid, and it is particularly preferable to use dimethylolpropanoic acid. These compounds can be individually used, or two or more of them can be used in combination. The number average molecular weight Mn herein means a value measured by the terminal functional group quantification method. The aforementioned various compounds are mere examples of preferred compounds in the present invention. Therefore, the hydroxyl group-containing compound (a4) having the carboxyl group used in the present invention is not limited to those various compounds mentioned above. In addition to those various compounds mentioned above, any hydroxyl group-containing compound (a4) having the carboxyl group that is currently commercially available and easily available in the market can be used in the present invention.

As the polyisocyanate component (b), a conventionally known polyisocyanate component used for producing the polyurethane resin can be used. Specific examples of the polyisocyanate component (b) include: aromatic diisocyanates such as toluene-2,4-diisocyanate, toluene-2,6-diisocyanate, a mixture thereof, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylenebis(phenylene isocyanate) (MDI), and crude or polymeric MDI, durylene diisocyanate, xylylene diisocyanate (XDI), 1,5-naphthalene diisocyanate, benzidine diisocyanate, o-nitrobenzidine diisocyanate, and 4,4-diisocyanate dibenzyl; aliphatic diisocyanates such as methylene diisocyanate, 1,4-tetramethylene diisocyanate, 1,6-hexamethylene diisocyanate, and 1,10-decamethylene diisocyanate; alicyclic diisocyanates such as 1,4-cyclohexylene diisocyanate, 4,4'-methylenebis(cyclohexyl isocyanate), 1,5-tetrahydronaphthalene diisocyanate, isophorone diisocyanate, and hydrogenated XDI; and polyurethane prepolymers obtained by reacting these diisocyanates with low molecular weight polyols so that the terminals are isocyanate.

Among these polyisocyanate components (b), it is preferable to use an aromatic isocyanate, and particularly preferable to use toluene-2,4-diisocyanate, toluene-2,6-diisocyanate, a mixture thereof, 4,4'-methylenebis(phenylene isocyanate) (MDI), and crude or polymeric MDI, in terms of obtaining the adhesive layer 10b of the hot melt adhesive sheet 10 that is inexpensive and excellent in heat resistance in an industrially stable manner. Use of the aromatic isocyanate as the polyisocyanate component (b) enables the polyurethane resin (A) to have the constituent unit of the aromatic diisocyanate. These polyisocyanate components (b) can be individually used, or two or more of them can be used in combination.

### (Method for producing polyurethane resin (A))

The polyurethane resin (A) can be produced by a conventionally known method for producing polyurethane. Specifically, first, a reaction composition including, as the reactive components, the polyol (a1) having the skeleton with 8 or more carbon atoms, the polyol (a2), the polyisocyanate component (b), and the short chain diol (a3) used as a chain extender as necessary is caused to react in the presence or absence of an organic solvent not including active hydrogen in the molecule to obtain the polyurethane resin (A). In obtaining the polyurethane resin (A), the hydroxyl group-containing compound (a4) having the carboxyl group can be used as appropriate. The reaction composition generally has a composition in which an equivalent ratio between the isocyanate group and the hydroxyl groups is 0.8 to 1.25. The reaction can be carried out by a one-shot method or a multi-stage method generally at 20 to 150 °C, preferably at 60 to 110 °C.

The polyurethane resin (A) obtained as above preferably has a mass average molecular weight Mw of 1,000 or more and 100,000 or less. The mass average molecular weight Mw of the polyurethane resin (A) falling within the above numerical range allows the hot melt adhesive including the polyurethane resin (A) to more effectively exhibit properties such as tight adhesiveness to the base material, hot water resistance, acid resistance, and alcohol resistance. The mass average molecular weight Mw of the polyurethane resin (A) means a value measured according to gel permeation chromatography (GPC). The mass average molecular weight Mw of the polyurethane resin (A) can be measured, for example, using the following apparatus and conditions.

### Measurement equipment and measurement conditions

- Equipment: Trade name "HLC-8020" (manufactured by Tosoh Corporation)
- Column: trade names "TSKgel G2000HXL", "G3000HXL", and "G4000GXL" (manufactured by Tosoh Corporation)
- Solvent: THF
- Flow rate: 1.0 ml/min
- Sample concentration: 2 g/L
- Injection volume: 100 µL
- Temperature: 40 °C
- Detector: Model number "RI-8020" (manufactured by Tosoh Corporation)
- Standard material: TSK standard polystyrene (manufactured by Tosoh Corporation)

In this embodiment, a catalyst can be used as necessary in synthesizing the polyurethane resin. Examples of the catalyst include a salt of a metal and an organic or inorganic acid, such as dibutyltin laurate, dioctyltin laurate, stannous octoate, zinc octylate, and tetra n-butyl titanate; an organometallic derivative; an organic amine such as triethylamine; and a diazabicycloundecene-based catalyst. The catalyst accelerates the synthesis reaction of the polyurethane resin. However, if the catalyst is excessively used, there is a likelihood of inducing a decomposition reaction that decomposes substances other than the polyurethane resin, as a consequence of which the resulting hot melt adhesive may have poor long-term heat resistance. Thus, when the catalyst is used, it is preferable to use an appropriate amount of the catalyst.

The polyurethane resin (A) can be synthesized without using an organic solvent, or can be synthesized using an organic solvent. As the organic solvent, an organic solvent inactive to an isocyanate group or an organic solvent less active than the reactive components to an isocyanate group can be used. Specific examples of the organic solvent include ketone-based solvents such as acetone, methyl ethyl ketone, methyl isobutyl ketone, and cyclohexanone; aromatic hydrocarbon solvents such as toluene, xylene, Swazol (trade name, manufactured by Cosmo Oil Co., Ltd.), and SOLVESSO (trade name, manufactured by Exxon Chemical); aliphatic hydrocarbon solvents such as n-hexane; alcohol-based solvents such as methanol, ethanol, and isopropyl alcohol; ether-based solvents such as dioxane and tetrahydrofuran; ester-based solvents such as ethyl acetate, butyl acetate, and isobutyl acetate; carbonic acid ester-based solvents such as dimethyl carbonate, diethyl carbonate, and ethylene carbonate; glycol ether ester-based solvents such as ethylene glycol ethyl ether acetate, propylene glycol methyl ether acetate, 3-methyl-3-methoxybutyl acetate, and ethyl-3-ethoxypropionate; amide-based solvents such as dimethylformamide and dimethylacetamide; and lactam-based solvents such as N-methyl-2-pyrrolidone. In particular, toluene, methyl ethyl ketone, and ethyl acetate are preferable in terms of increasing the solubility of the polyurethane resin and in terms of being easily volatilized when the hot melt adhesive is obtained.

### (Epoxy resin (B))

The epoxy resin (B) is a bisphenol A type epoxy resin having an epoxy equivalent of 450 g/eq or more and 3000 g/eq or less. Commercially available examples of such a bisphenol A type epoxy resin include "jER1001", "jER1002", "jER1003", "jER1055", "jER1004", "jER1004AF", and "jER1007", which are manufactured by Mitsubishi Chemical Corporation. In the bisphenol A type epoxy resin, the upper limit of the epoxy equivalent is preferably 100 g/eq. In addition, in the bisphenol A type epoxy resin, the upper limit of the epoxy equivalent is preferably 900 g/eq, more preferably 800 g/eq, further preferably 700 g/eq, particularly preferably 600 g/eq. Examples of the commercially available bisphenol A type epoxy resin include those aforementioned various commercially available products except "jER1007". The commercially available bisphenol A type epoxy resins are all solid at normal temperature (23 ±2 °C). The epoxy equivalent can be determined in accordance with JIS K7236.

The adhesive layer 10b of the hot melt adhesive sheet 10 according to this embodiment includes preferably 10 mass parts or more, more preferably 15 mass parts or more, further preferably 20 mass parts or more, of the bisphenol A type epoxy resin based on 100 mass parts of the polyurethane resin (A). The adhesive layer 10b of the hot melt adhesive sheet 10 according to this embodiment includes preferably 50 mass parts or less, more preferably 40 mass parts or less, further preferably 30 mass parts or less, of the bisphenol A type epoxy resin based on 100 mass parts of the polyurethane resin (A).

### (Isocyanate-based crosslinking agent (C))

The isocyanate-based crosslinking agent (C) is not particularly limited, and any of the known crosslinking agents that have been conventionally used, such as those having a polyfunctional isocyanate group, e.g., an isocyanurate, a biuret, an adduct, and a polymeric, can be used. Examples of the isocyanate-based crosslinking agent (C) include a dimer of 2,4-toluylene diisocyanate, triphenylmethane triisocyanate, tris-(p-isocyanatophenyl)thiophosphite, a polyfunctional aromatic isocyanate, a polyfunctional aromatic aliphatic isocyanate, a polyfunctional aliphatic isocyanate, a fatty acid-modified polyfunctional aliphatic isocyanate, a block polyisocyanate such as a blocked polyfunctional aliphatic isocyanate, and a polyisocyanate prepolymer.

Among these isocyanate-based crosslinking agents (C), diphenylmethane diisocyanate, tolylene diisocyanate, and xylylene diisocyanate are preferable as aromatic crosslinking agents. As aliphatic crosslinking agents, modified products such as hexamethylene diisocyanate and isophorone diisocyanate are preferable. The isocyanate-based crosslinking agent (C) preferably includes three or more isocyanate groups in one molecule. Further, as the isocyanate-based crosslinking agent (C), for example, a multimer of the polyisocyanate, an adduct of the polyisocyanate and another compound, or a urethane prepolymer obtained by causing a low molecular weight polyol to react with polyamine to have isocyanate located at the molecular terminal is also preferably used. Among the various isocyanate-based crosslinking agents (C), xylylene diisocyanate is preferably used. Examples of a commercially available product of the xylylene diisocyanate include: trade name "TAKENATE D-110N" manufactured by MITSUI TAKEDA CHEMICALS, INC.

The adhesive layer 10b of the hot melt adhesive sheet 10 according to this embodiment includes 6 mass parts or more and 14 mass parts or less of the isocyanate-based crosslinking agent (C) based on 100 mass parts of the polyurethane resin (A). The isocyanate-based crosslinking agent (C) is included in an amount of preferably 7 mass parts or more, more preferably 8 mass parts or more, further preferably 9 mass parts or more, based on 100 mass parts of the polyurethane resin (A). The isocyanate-based crosslinking agent (C) is included in an amount of preferably 13 mass parts or less, more preferably 12 mass parts or less, further preferably 11 mass parts or less, based on 100 mass parts of the polyurethane resin (A).

Next, with reference to Fig. 2, a description will be further given by taking, as an example, the case where an adherend to which the adhesive layer 10b of the hot melt adhesive sheet 10 according to this embodiment is to adhere is a membrane electrode assembly (MEA) 20 of a solid polymer fuel cell.

The membrane electrode assembly (MEA) 20 as the adherend is configured to allow hydrogen gas to pass therethrough from a negative electrode side toward a positive electrode side and to cause the hydrogen to react with oxygen supplied to the positive electrode side to generate electricity.

As shown in Fig. 2, the membrane electrode assembly (MEA) 20 includes a solid electrolyte membrane 201 having surfaces opposite to each other, on which a positive electrode 202 and a negative electrode 203 are respectively laminated. The positive electrode 202 includes a positive electrode catalyst layer 202a and a positive electrode gas diffusion layer 202b laminated on the positive electrode catalyst layer 202a, and the positive electrode catalyst layer 202a is laminated on one surface of the solid electrolyte membrane 201. The negative electrode 203 includes a negative electrode catalyst layer 203a and a negative electrode gas diffusion layer 203b laminated on the negative electrode catalyst layer 203a, and the negative electrode catalyst layer 203a is laminated on an other surface of the solid electrolyte membrane 201.

As shown in Fig. 2, the positive electrode catalyst layer 202a and the negative electrode catalyst layer 203a are each formed to have a smaller plane dimension than that of the solid electrolyte membrane 201, and the positive electrode gas diffusion layer 202b and the negative electrode gas diffusion layer 203b are formed to respectively have smaller plane dimensions than those of the positive electrode catalyst layer 202a and the negative electrode catalyst layer 203a. That is, in the membrane electrode assembly (MEA) 20, each of the plane dimensions of the positive electrode 202 and the negative electrode 203 is smaller than the plane dimension of the solid electrolyte membrane 201. Since the positive electrode 202 has a smaller plane dimension than that of the solid electrolyte membrane 201 as aforementioned, a positive electrode side electrolyte membrane exposed area 201a, which is a portion of the solid electrolyte membrane 201 extending outward from the positive electrode catalyst layer 202a to have an exposed surface, is formed in an outer peripheral portion on the positive electrode side (i.e., on the one surface side) of the membrane electrode assembly (MEA) 20. Further, since the negative electrode 203 has a smaller plane dimension than that of the solid electrolyte membrane 201, a negative electrode side electrolyte membrane exposed area 201b, which is a portion of the solid electrolyte membrane 201 extending outward from the negative electrode catalyst layer 203a to have an exposed surface, is formed in an outer peripheral portion on the negative electrode side (i.e., on the other surface side) of the membrane electrode assembly (MEA) 20.

A positive electrode side catalyst layer exposed area 202a1, which is a portion of the positive electrode catalyst layer 202a extending outward from the positive electrode gas diffusion layer 202b to have an exposed surface, is formed on the positive electrode side of the membrane electrode assembly (MEA) 20. The positive electrode side catalyst layer exposed area 202a1 is formed inside the positive electrode side electrolyte membrane exposed area 201a and outside the positive electrode gas diffusion layer 202b. In this embodiment, the positive electrode side electrolyte membrane exposed area 201a is formed in an annular shape to extend around the outer peripheral portion of the membrane electrode assembly (MEA) 20. The positive electrode side catalyst layer exposed area 202a1 is formed in an annular shape smaller than that of the positive electrode side electrolyte membrane exposed area 201a. That is, on the positive electrode side of the membrane electrode assembly (MEA) 20, a first boundary line L1 that is a boundary line between the positive electrode side electrolyte membrane exposed area 201a and the positive electrode side catalyst layer exposed area 202a1 is defined, and a second boundary line L2 that is a boundary line between the positive electrode side catalyst layer exposed area 202a1 and the positive electrode gas diffusion layer 202b is defined inside the first boundary line L1.

A negative electrode side catalyst layer exposed area 203a1, which is a portion of the negative electrode catalyst layer 203a extending outward from the negative electrode gas diffusion layer 203b to have an exposed surface, is formed on the negative electrode side of the membrane electrode assembly (MEA) 20. The negative electrode side catalyst layer exposed area 203a1 is formed inside the negative electrode side electrolyte membrane exposed area 201b and outside the negative electrode gas diffusion layer 203b. In this embodiment, the negative electrode side electrolyte membrane exposed area 201b is formed in an annular shape to extend around the outer peripheral portion of the membrane electrode assembly (MEA) 20. The negative electrode side catalyst layer exposed area 203a1 is formed in an annular shape smaller than that of the negative electrode side electrolyte membrane exposed area 201b. That is, on the negative electrode side of the membrane electrode assembly (MEA) 20, a third boundary line L3 that is a boundary line between the negative electrode side electrolyte membrane exposed area 201b and the negative electrode side catalyst layer exposed area 203a1 is defined, and a fourth boundary line L4 that is a boundary line between the negative electrode side catalyst layer exposed area 203a1 and the negative electrode gas diffusion layer 203b is defined inside the third boundary line L3.

In the usage shown in Fig. 2, two hot melt adhesive sheets 10, namely a first hot melt adhesive sheet 10 that adheres to the positive electrode side of the membrane electrode assembly (MEA) 20 and a second hot melt adhesive sheet 10 that adheres to the negative electrode side of the membrane electrode assembly (MEA) 20, are used as sub-gasket materials of the solid polymer fuel cell.

The first hot melt adhesive sheet 10 has such an annular shape as to have the outer peripheral edge positioned outside the outer peripheral edge of the membrane electrode assembly (MEA) 20 when placed on the membrane electrode assembly (MEA) 20, and to have the inner peripheral edge positioned within the positive electrode side catalyst layer exposed area 202a1 and the negative electrode side catalyst layer exposed area 203a1.
That is, a hollow portion of the first hot melt adhesive sheet 10 has a shape slightly larger than the positive electrode gas diffusion layer 202b.

The second hot melt adhesive sheet 10 also has a similar shape to that of the first hot melt adhesive sheet 10.

In this embodiment, the first hot melt adhesive sheet 10 and the second hot melt adhesive sheet 10 are used as the sub-gasket materials by causing the outer peripheral portions of the adhesive layers 10b to directly adhere to each other outside the membrane electrode assembly (MEA) 20.

An inner peripheral portion of the first hot melt adhesive sheet 10 other than the outer peripheral portion adhering to the second hot melt adhesive sheet 10 adheres to the outer peripheral portion of the membrane electrode assembly (MEA) 20, and adheres to an area of the membrane electrode assembly (MEA) 20 extending from the positive electrode side electrolyte membrane exposed area 201a through the first boundary line L1 to the positive electrode side catalyst layer exposed area 202a1. Similar to the first hot melt adhesive sheet 10, the second hot melt adhesive sheet 10 also adheres to the membrane electrode assembly (MEA) 20.

The hot melt adhesive sheets 10 are attached (adhere) to the membrane electrode assembly (MEA) 20 as described above to allow positive electrode gas to partially pass through the positive electrode side electrolyte membrane exposed area and negative electrode gas to partially pass through the negative electrode side electrolyte membrane exposed area 201b, thereby being capable of suppressing the performance as the solid polymer fuel cell from being degraded.

As has been described, in the solid polymer fuel cell, hydrogen and oxygen react with each other in the membrane electrode assembly (MEA) 20 to generate electricity. When hydrogen and oxygen react as above, the membrane electrode assembly (MEA) 20 reaches a relatively high temperature (for example, 95 °C). When the solid polymer fuel cell is mounted as a power source for an automobile, a central portion of the membrane electrode assembly (MEA) 20 is sufficiently cooled by circulating antifreeze in a radiator through a pipe, but the pipe does not usually extend to an end edge portion of the membrane electrode assembly (MEA) 20. Thus, the end edge portion of the membrane electrode assembly (MEA) 20 remains at a high temperature.

When the antifreeze is being circulated, there are some cases where the antifreeze partially leaks out of the pipe to come into contact with the adhesive layer 10b attached to an end edge side of the solid electrolyte membrane 201. In such a case, the adhesive layer 10b is in contact with polyethylene glycol and water at a high temperature since the antifreeze generally includes polyethylene glycol and water as liquid components.

Further, in the reaction for generating electricity described above, hydrogen ions (H+) undergo mass transfer within the membrane electrode assembly (MEA) 20 to cause the membrane electrode assembly (MEA) 20 to become as strongly acidic as dilute sulfuric acid of about 0.1 to 0.5 M. In such a case, the adhesive layer 10b attached to the end edge side of the solid electrolyte membrane 201 is exposed to strong acidity at a high temperature.

In the hot melt adhesive sheet 10 according to this embodiment, the adhesive layer 10b configured as above is excellent in long-term hot water resistance, long-term acid resistance, and long-term alcohol resistance. When the hot melt adhesive sheet according to this embodiment is used as the sub-gasket material in the solid polymer fuel cell mounted on an automobile, the above configuration enables the hot melt adhesive sheet to maintain adhesiveness to the solid electrolyte membrane 201 for a long period of time (1000 hours) even if the adhesive layer 10b is in contact with water or alcohol at a high temperature of 95 °C or if the adhesive layer 10b is exposed to strong acidity at a high temperature of 95 °C as described above. As will be described later, the solid electrolyte membrane 201 is generally made of a fluororesin such as perfluorocarbon sulfonic acid.

In the membrane electrode assembly (MEA) 20, the positive electrode catalyst layer 202a and the negative electrode catalyst layer 203a are generally made of: a catalyst supporting material such as a carbon material supporting a catalyst; a proton conductive polymer; and a catalyst ink composition including a catalyst.

The solid electrolyte membrane 201 of the membrane electrode assembly (MEA) 20 is made of, for example, a fluorine resin such as a perfluorocarbon sulfonic acid resin. Examples of the perfluorocarbon sulfonic acid resin include: trade name "Nafion" manufactured by DuPont; trade name "Flemion" manufactured by Asahi Kasei Corporation; and trade name "Aciplex" manufactured by AGC Inc. The perfluorocarbon sulfonic acid resin is, for example, a resin having a polymer structure shown in the following formula (1). With regard to m, n and x in the following formula (1), for example, m ≥ 1, n = 2, and x = 5 to 13.5 hold for the "Nafion", m = 0.1, n = 2 to 5, and x = 1.5 to 14 hold for the "Aciplex", and m = 0.1 and n = 1 to 5 hold for the "Flemion".

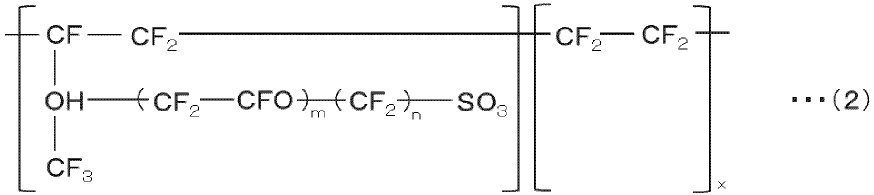

The positive electrode catalyst layer 202a and the negative electrode catalyst layer 203a are layers including catalyst particles. Examples of the catalyst particles included in the positive electrode catalyst layer 202a include platinum. Examples of the catalyst particles included in the negative electrode catalyst layer 203a include a platinum compound. Examples of the platinum compound include an alloy of platinum and at least one metal selected from the group consisting of ruthenium, palladium, nickel, molybdenum, iridium, and iron.

The positive electrode gas diffusion layer 202b and the negative electrode gas diffusion layer 203b are each formed of a porous conductive base material. Examples of the porous conductive base material include carbon paper and carbon cloth.

The hot melt adhesive sheet 10 according to this embodiment can be used also in a redox flow cell. The hot melt adhesive sheet for use in the redox flow cell is used for suppressing the permeation of an electrolyte.

The matters disclosed herein include the following:

(1) A hot melt adhesive sheet including a base material having at least one surface on which an adhesive layer made of a hot melt adhesive is disposed, in which
   the hot melt adhesive includes a crosslinked product of an adhesive composition including a crosslinking agent, and includes a polyurethane resin, an epoxy resin, and 6 mass parts or more and 14 mass parts or less of an isocyanate-based crosslinking agent based on 100 mass parts of the polyurethane resin,
   the polyurethane resin has a constituent unit derived from a polyol having a skeleton with 8 or more carbon atoms, and
   the epoxy resin is a bisphenol A type epoxy resin having an epoxy equivalent of 450 g/eq or more and 3000 g/eq or less.

Such a configuration allows the adhesive layer of the hot melt adhesive sheet to be excellent in hot water resistance, acid resistance, and alcohol resistance.

(2) The hot melt adhesive sheet according to (1) above, in which the epoxy resin is a bisphenol A type epoxy resin having an epoxy equivalent of 450 g/eq or more and 1000 g/eq or less.

Such a configuration allows the adhesive layer of the hot melt adhesive sheet to be more excellent in hot water resistance, acid resistance, and alcohol resistance.

(3) The hot melt adhesive sheet according to (1) or (2) above, in which the polyurethane resin includes a hydroxyl group-containing polyurethane resin having a hydroxyl group, and
the hydroxyl group-containing polyurethane resin has a hydroxyl value of 0.1 mgKOH/g or more and 20 mgKOH/g or less.

Such a configuration allows the adhesive layer of the hot melt adhesive sheet to be more excellent in hot water resistance, acid resistance, and alcohol resistance.

(4) The hot melt adhesive sheet according to any of (1) to (3) above, in which the polyurethane resin has an aromatic diisocyanate as a constituent unit.

Such a configuration allows the adhesive layer of the hot melt adhesive sheet to be more excellent in hot water resistance, acid resistance, and alcohol resistance.

(5) The hot melt adhesive sheet according to any of (1) to (4) above, in which the polyurethane resin has a mass average molecular weight Mw of 1,000 or more and 100,000 or less.

Such a configuration allows the adhesive layer of the hot melt adhesive sheet to be more excellent in hot water resistance, acid resistance, and alcohol resistance.

(6) The hot melt adhesive sheet according to any of (1) to (5) above, the hot melt adhesive sheet being configured to adhere to a solid electrolyte membrane of a solid polymer fuel cell for use.

The hot melt adhesive sheet according to the present invention is not limited to the above embodiment. Further, the hot melt adhesive sheet according to the present invention is not limited by the abovementioned operational effects, either. Various modifications can be made to the hot melt adhesive sheet according to the present invention without departing from the gist of the present invention.

### EXAMPLES

### [Synthesis of polyurethane resin (A)]

A reaction vessel equipped with a stirrer, a reflux condenser, a thermometer, a nitrogen inlet tube, and a manhole was prepared. While the inside of the reactor vessel was replaced with nitrogen, charged in the reactor vessel were 300.0 g of polyhexamethylene carbonate diol having hydroxyl groups at both terminals (DURANOL: T6002, manufactured by Asahi Kasei Chemicals Corporation), 200.0 g of polycyclohexanedimethanol/hexanediol copolymer carbonate diol (trade name "ETERNACOLLUM-90 (3/1)", manufactured by Ube Industries, Ltd.; hydroxyl value = 112.2 mg KOH/g, cyclohexanedimethanol/hexanediol = 3/1 molar ratio), and 10.0 g of 1,3-butylene glycol. Next, 207.3 g of methyl ethyl ketone (MEK) was charged as a solvent, and the contents in the reactor vessel were stirred. After the contents in the reactor vessel were uniformly mixed, 111.8 g of 4,4'-diphenylmethane diisocyanate (MDI) was charged at 50 °C and caused to react at 80 °C to obtain a reaction liquid. The reaction liquid was diluted with methyl ethyl ketone (MEK) as a solvent to adjust the viscosity of the reaction liquid, and the reaction was allowed to proceed until absorption at 2,270 cm-1 by a free isocyanate group measured by infrared absorption spectrum analysis disappeared, to obtain a resin solution AA including the polyurethane resin A. The resulting resin solution AA had a solid content of 30 mass %, and the polyurethane resin A had a hydroxyl value of 2.5 mgKOH/g and included 29.7 mass % of the polyol (a1) with the skeleton having 8 or more carbon atoms. The mass average molecular weight of the polyurethane resin A measured by GPC was 72,000.

### [Example of dissolution of epoxy resin (B)]

### <Example of dissolution of epoxy resin: B1>

A reaction vessel equipped with a stirrer, a reflux condenser, a thermometer, a nitrogen inlet tube, and a manhole was prepared. While the inside of the reactor vessel was replaced with nitrogen, 400.0 g of a bisphenol A type epoxy resin (epoxy equivalent: 450 g/eq, jER1001: manufactured by Mitsubishi Chemical Corporation, hereinafter referred to as epoxy resin B1) was charged in the vessel, and 600.0 g of methyl ethyl ketone (MEK) was charged as a solvent while stirring, followed by raising the temperature in the vessel to 60 ° C to completely dissolve the epoxy resin B1, thereby obtaining a dissolved product BB1 of the epoxy resin B1 (hereinafter referred to as epoxy resin solution BB1). The resulting epoxy resin solution BB1 had a solid content of 40 mass %.

### <Example of dissolution of epoxy resin: B2>

A reaction vessel equipped with a stirrer, a reflux condenser, a thermometer, a nitrogen inlet tube, and a manhole was prepared. While the inside of the reactor vessel was replaced with nitrogen, 400.0 g of a bisphenol A type epoxy resin (epoxy equivalent: 1975 g/eq, jER1007: manufactured by Mitsubishi Chemical Corporation, hereinafter referred to as epoxy resin B2) was charged in the vessel, and 600.0 g of methyl ethyl ketone (MEK) was charged as a solvent while stirring, followed by raising the temperature in the vessel to 60 °C to completely dissolve the epoxy resin B2, thereby obtaining a dissolved product BB2 of the epoxy resin B2 (hereinafter referred to as epoxy resin solution BB2). The resulting epoxy resin solution BB2 had a solid content of 40 mass %.

### <Example of dissolution of epoxy resin: B3>

A reaction vessel equipped with a stirrer, a reflux condenser, a thermometer, a nitrogen inlet tube, and a manhole was prepared. While the inside of the reactor vessel was replaced with nitrogen, 400.0 g of a bisphenol A type phenoxy resin (epoxy equivalent:8500 g/eq, jER1256: manufactured by Mitsubishi Chemical Corporation, hereinafter referred to as epoxy resin B3) was charged in the vessel, and 600.0 g of methyl ethyl ketone (MEK) was charged as a solvent while stirring, followed by raising the temperature in the vessel to 60 °C to completely dissolve the epoxy resin B3, thereby obtaining a dissolved product BB3 of the epoxy resin B3 (hereinafter referred to as epoxy resin solution BB3). The resulting epoxy resin solution BB3 had a solid content of 40 mass %.

### <Example of dissolution of epoxy resin: B4>

A reaction vessel equipped with a stirrer, a reflux condenser, a thermometer, a nitrogen inlet tube, and a manhole was prepared. While the inside of the reactor vessel was replaced with nitrogen, 800.0 g of a bisphenol A novolac type epoxy resin (with three or more functional groups) (epoxy equivalent: 200 g/eq, jER157S70: manufactured by Mitsubishi Chemical Corporation, hereinafter referred to as epoxy resin B4) was charged in the vessel, and 200.0 g of methyl ethyl ketone (MEK) was charged as a solvent while stirring, followed by raising the temperature in the vessel to 60 °C to completely dissolve the epoxy resin 4, thereby obtaining a dissolved product BB4 of the epoxy resin B4 (epoxy resin solution BB4). The resulting epoxy resin solution BB4 had a solid content of 80 mass %.

### (Example 1)

The resin solution AA including the polyurethane resin A and the epoxy resin solution BB1 were mixed in a mixing proportion shown in Table 1 below to obtain a mixed solution, and then, as the isocyanate-based crosslinking agent (C), trade name " TAKENATE D-110N" manufactured by MITSUI TAKEDA CHEMICALS, INC. was further added to the mixed solution in a mixing proportion shown in Table 1 below to obtain a hot melt adhesive layer composition according to Example 1.

### (Example 2)

A hot melt adhesive layer composition according to Example 2 was obtained in the same manner as in Example 1, except that the epoxy resin solution BB2 was used in substitution for the epoxy resin solution BB1.

### (Comparative Example 1)

A hot melt adhesive layer composition according to Comparative Example 1 was obtained in the same manner as in Example 1, except that the epoxy resin solution BB3 was used in substitution for the epoxy resin solution BB 1.

### (Comparative Example 2)

A hot melt adhesive layer composition according to Comparative Example 2 was obtained in the same manner as in Example 1, except that the epoxy resin solution BB4 was used in substitution for the epoxy resin solution BB 1.

### (Comparative Example 3)

A hot melt adhesive layer composition according to Comparative Example 3 was obtained in the same manner as in Example 1, except that the mixing proportion of the isocyanate-based crosslinking agent (C) was changed as shown in Table 1.

### (Comparative Example 4)

A hot melt adhesive layer composition according to Comparative Example 4 was obtained in the same manner as in Example 1, except that the mixing proportion of the isocyanate-based crosslinking agent (C) was changed as shown in Table 1.

**Table 1**

| | | Ex. 1 | Ex. 2 | C. Ex. 1 | C. Ex. 2 | C. Ex. 3 | C. Ex. 4 |
|---|---|---|---|---|---|---|---|
| Polyurethane resin (A) | | 100 | 100 | 100 | 100 | 100 | 100 |
| Epoxy resin (B) | jER1001 | 25 | | | | 25 | 25 |
| | jER1007 | | 25 | | | | |
| | jER1256 | | | 25 | | | |
| | jER157S70 | | | | 25 | | |
| Isocyanate-based crosslinking agent (C) | TAKENATE D110N | 10 | 10 | 10 | 10 | 15 | 5 |

### [Coating with hot melt adhesive layer composition]

The hot melt adhesive layer composition of each of the Examples was diluted with methyl ethyl ketone (MEK) to a solid content of 30 mass %. In each of the Examples, an entire surface on one side of a PEN film (Teonex having height: 210 mm, width: 150 mm, thickness: 100 µm, manufactured by Toyobo Film Solutions Limited) was coated with the diluted hot melt adhesive layer composition, dried at 100 °C for a minute after the coating, followed by being allowed to stand in an oven at 40 °C for 48 hours to cause a curing reaction (crosslinking reaction) to proceed, to obtain a PEN film with a hot melt adhesive layer. The coating was carried out so that the hot melt adhesive layer after the drying had a thickness of 20 µm.

### [Preparation of first adhesive sheet]

Two sheets of the PEN film with the hot melt adhesive layer of each of the Examples were prepared, and the two sheets of the PEN film with the hot melt adhesive layer overlapped each other to bring their surfaces with the hot melt adhesive layer into abutting contact with each other. Using a laminator adjusted to 140 °C, the two sheets of the PEN film with the hot melt adhesive layer of each of the Examples were bonded together by thermocompression bonding to prepare a first adhesive sheet according to each of the Examples.

### [Preparation of second adhesive sheet]

The PEN film with the hot melt adhesive layer of each of the Examples and a perfluorocarbon sulfonic acid resin sheet (tetrafluoroethylene/perfluoro[2-(fluorosulfonylethoxy)propyl vinyl ether] copolymer membrane (manufactured by DuPont, trade name "NAFIONN-115")) (having the same shape as the film with the hot melt adhesive layer) overlapped each other to bring a surface of the PEN film with the hot melt adhesive layer of each of the Examples on which the hot melt adhesive layer is exposed into abutting contact with one surface of the perfluorocarbon sulfonic acid resin sheet. Using a laminator adjusted to 140 °C, the PEN film with the hot melt adhesive layer of each of the Examples and the perfluorocarbon sulfonic acid resin sheet were bonded together by thermocompression bonding to prepare a second adhesive sheet according to each of the Examples.

### [Hot water resistance 1]

For the first adhesive sheet of each of the Examples, a test specimen having a width of 10 mm and a length of 80 mm was cut out from the first adhesive sheet of each of the Examples, and was immersed in hot water at 95 °C for 1000 hours and then cooled to room temperature. Thereafter, the test specimen was evaluated for hot water resistance based on the following criteria:
- Excellent: No peeling observed after the immersion.
- Good: No peeling observed but some lifting observed after the immersion.
- Bad: Peeling observed after the immersion.

### [Acid resistance 1]

For the first adhesive sheet of each of the Examples, a test specimen having a width of 10 mm and a length of 80 mm was cut out from the first adhesive sheet of each of the Examples, and was immersed in dilute sulfuric acid of pH 2 at 95 °C for 1000 hours and then cooled to room temperature. Thereafter, the test specimen was evaluated for acid resistance based on the following criteria:
- Excellent: No peeling observed after the immersion.
- Good: No peeling observed but some lifting observed after the immersion.
- Bad: Peeling observed after the immersion.

### [Alcohol resistance 1]

For the first adhesive sheet of each of the Examples, a test specimen having a width of 10 mm and a length of 80 mm was cut out from the first adhesive sheet of each of the Examples, and was immersed in a water-ethylene glycol mixed solution (with a mixing proportion of ethylene glycol of 50 volume %) at 95 °C for 1000 hours and then cooled to room temperature. Thereafter, the test specimen was evaluated for alcohol resistance based on the following criteria:
- Excellent: No peeling observed after the immersion.
- Good: No peeling observed but some lifting observed after the immersion.
- Bad: Peeling observed after the immersion.

### [Hot water resistance 2]

For the second adhesive sheet of each of the Examples, a test specimen having a width of 10 mm and a length of 80 mm was cut out from the second adhesive sheet of each of the Examples, and was immersed in hot water at 95 °C for 1000 hours and then cooled to room temperature. Thereafter, the test specimen was evaluated for hot water resistance based on the following criteria:
- Excellent: No peeling observed after the immersion.
- Good: No peeling observed but some lifting observed after the immersion.
- Bad: Peeling observed after the immersion.

### [Acid resistance 2]

For the second adhesive sheet of each of the Examples, a test specimen having a width of 10 mm and a length of 80 mm was cut out from the second adhesive sheet of each of the Examples, and was immersed in dilute sulfuric acid of pH 2 at 95 °C for 1000 hours and then cooled to room temperature. Thereafter, the test specimen was evaluated for acid resistance based on the following criteria:
- Excellent: No peeling observed after the immersion.
- Good: No peeling observed but some lifting observed after the immersion.
- Bad: Peeling observed after the immersion.

### [Alcohol resistance 2]

For the second adhesive sheet of each of the Examples, a test specimen having a width of 10 mm and a length of 80 mm was cut out from the second adhesive sheet of each of the Examples, and was immersed in a water-ethylene glycol mixed solution (with a mixing proportion of ethylene glycol of 50 volume %) at 95 °C for 1000 hours and then cooled to room temperature. Thereafter, the test specimen was evaluated for alcohol resistance based on the following criteria:
- Excellent: No peeling observed after the immersion.
- Good: No peeling observed but some lifting observed after the immersion.
- Bad: Peeling observed after the immersion.

The results of the above evaluations are shown in Table 2 below.

**Table 2**

| | Evaluation item | Ex. 1 | Ex. 2 | C. Ex. 1 | C. Ex. 2 | C. Ex. 3 | C. Ex. 4 |
|---|---|---|---|---|---|---|---|
| First adhesive sheet | Hot water resistance 1 | Excellent | Excellent | Bad | Bad | Bad | Bad |
| | Acid resistance 1 | Excellent | Excellent | Bad | Bad | Bad | Bad |
| | Alcohol resistance 1 | Excellent | Excellent | Bad | Bad | Bad | Bad |
| Second adhesive sheet | Hot water resistance 2 | Excellent | Good | Bad | Bad | Bad | Bad |
| | Acid resistance 2 | Excellent | Good | Bad | Bad | Bad | Bad |
| | Alcohol resistance 2 | Excellent | Bad | Bad | Bad | Bad | Bad |

As can be seen from Table 2 above, both the first adhesive sheet and the second adhesive sheet in Example 1 were evaluated as Excellent for all evaluation items. In Example 2, the first adhesive sheet was excellent in hot water resistance, acid resistance, and alcohol resistance. In contrast, in Comparative Examples 1 to 4, both the first adhesive sheet and the second adhesive sheet were evaluated as Bad for all evaluation items.

### REFERENCE SIGNS LIST

10: Hot melt adhesive sheet
20: Membrane electrode assembly (MEA)
201: Solid electrolyte membrane
202: Positive electrode
203: Negative electrode
10a: Base material
10b: Adhesive layer
201a: Positive electrode side electrolyte membrane exposed area
201b: Negative electrode side electrolyte membrane exposed area
202a: Positive electrode catalyst layer
202b: Positive electrode gas diffusion layer
203a: Negative electrode catalyst layer
203b: Negative electrode gas diffusion layer
202a1: Positive electrode side catalyst layer exposed area
203a1: Negative electrode side catalyst layer exposed area
L1: First boundary line
L2: Second boundary line
L3: Third boundary line
L4: Fourth boundary line

## Claims

1. A hot melt adhesive sheet comprising a base material having at least one surface on which an adhesive layer made of a hot melt adhesive is disposed, wherein
the hot melt adhesive comprises a crosslinked product of an adhesive composition comprising a crosslinking agent, and comprises a polyurethane resin, an epoxy resin, and 6 mass parts or more and 14 mass parts or less of an isocyanate-based crosslinking agent based on 100 mass parts of the polyurethane resin,
the polyurethane resin has a constituent unit derived from a polyol having a skeleton with 8 or more carbon atoms, and
the epoxy resin is a bisphenol A type epoxy resin having an epoxy equivalent of 450 g/eq or more and 3000 g/eq or less.

2. The hot melt adhesive sheet according to claim 1, wherein the epoxy resin is a bisphenol A type epoxy resin having an epoxy equivalent of 450 g/eq or more and 1000 g/eq or less.

3. The hot melt adhesive sheet according to claim 1 or 2, wherein the polyurethane resin comprises a hydroxyl group-containing polyurethane resin having a hydroxyl group, and
the hydroxyl group-containing polyurethane resin has a hydroxyl value of 0.1 mgKOH/g or more and 20 mgKOH/g or less.

4. The hot melt adhesive sheet according to any one of claims 1 to 3, wherein the polyurethane resin has an aromatic diisocyanate as a constituent unit.

5. The hot melt adhesive sheet according to any one of claims 1 to 4, wherein the polyurethane resin has a mass average molecular weight Mw of 1,000 or more and 100,000 or less.

6. The hot melt adhesive sheet according to any one of claims 1 to 5, the hot melt adhesive sheet being configured to adhere to a solid electrolyte membrane of a solid polymer fuel cell for use.
